(19) Europäisches Patentamt
European Patent Office
Office européen des brevets

(11) Veröffentlichungsnummer: **0 198 225 A2**

(12) # EUROPÄISCHE PATENTANMELDUNG

(21) Anmeldenummer: **86103377.7**

(51) Int. Cl.4: **E21B 37/06** , C11D 1/34

(22) Anmeldetag: **13.03.86**

(30) Priorität: **30.03.85 DE 3511760**

(43) Veröffentlichungstag der Anmeldung:
**22.10.86 Patentblatt 86/43**

(84) Benannte Vertragsstaaten:
**BE DE FR GB IT LU NL**

(71) Anmelder: **Akzo GmbH**
**Postfach 10 01 49 Kasinostrasse 19-23**
**D-5600 Wuppertal-1(DE)**

(72) Erfinder: **Zok, Claus-Peter, Dipl.-Ing.**
**Nelly-Pütz-Strasse 29**
**D-5162 Niederzier 2(DE)**
Erfinder: **Rahimian, Iradij, Dr. Dr.-Ing.**
**Walter-Nernst-Strasse 7**
**D-3392 Clausthal-Zellerfeld(DE)**

(54) **Mittel gegen das Ausfällen und Ablagern von Asphaltenen u.dgl.**

(57) Es wird ein Mittel zum Verhindern des Ausfällens und Ablagerns von Paraffinen, Erdölharzen und insbesondere von Asphaltenen u.dgl. beim Fördern oder Tranpsort von Erdöl beschrieben, das aus einer Lösung oder Dispersion von Phosphorsäureester der allgemeinen Formel

$$(RO)_r [ -(CH_2CH_2O)-_m ]_s PH(OH)_t$$

in einem organischen Lösungs-oder Dispersionsmittel besteht. Das Mittel ist auch in der Lage, bereits vorhandene Ablagerungen von Asphaltenen u.dgl. zu entfernen. Es wird durch Injizieren in den Erdölstrom angewendet. Es zeichnet sich durch gutes Viskositätsverhalten, gute Verteilbarkeit im Erdölstrom aus und ist auch noch bei niederen Temperaturen, z.B. bei 0°C lagerbar und verarbeitbar.

EP 0 198 225 A2

# Mittel gegen das Ausfällen und Ablagern von Asphaltenen u.dgl.

Die Erfindung betrifft ein Mittel sowie ein Verfahren zum Verhindern des Ausfällens und Ablagerns von Paraffinen, Erdölharzen, Asphaltenen u.dgl. beim Fördern oder Transport von Erdöl sowie zum Entfernen von gegebenenfalls bereits vorhandenen Ablagerungen der genannten Substanzen im Förder-oder Transportsystem.

Erdöl, d.h. Rohöl besteht in der Hauptsache aus folgenden Verbindungsgruppen: a) gesättigten Verbindungen, b) aromatischen Verbindungen, c) Erdölharzen und d) Asphaltenen.

Neben den Kohlenwasserstoffen können Verbindungen mit Heteroatomen vorhanden sein, wie z.B. Benzothiophen. Auch finden sich im Erdöl metallhaltige Verbindungen; schließlich können in mehr oder weniger großen Mengen auch anorganische Bestandteile vorhanden sein. Somit ist das Erdöl ein ziemlich komplexes Gemisch.

Bei der Förderung von Rohöl und beim Transport desselben treten vielfach Störungen auf, weil eine Reihe von Bestandteilen nur eine begrenzte Löslichkeit oder Dispergierbarkeit aufweisen und z.B. bei Änderung von Temperatur und Druck ausfallen. Es kommt dann zu unerwünschten Ablagerungen in den Rohrleitungen, insbesondere in Ventilen, an Schweißstellen, an Unregelmäßigkeiten in den Rohren, so daß sich der Querschnitt der Leitungen verringern kann, was zu einer Herabsetzung der Förderleistung führt. In schlimmen Fällen, insbesondere bei längerer Förderung oder bei Erdölen, die einen hohen Anteil von Substanzen besitzen, die zum Ausfällen und Ablagern neigen, kann es zum völligen Verschluß der Förder-oder Transportsysteme kommen, so daß die Produktion bzw. die Förderung gedrosselt oder unterbrochen werden muß und die Förderleitungen in einem langwierigen Prozeß wieder gesäubert werden müssen.

Neben Ablagerungen aus anorganischen Bestandteilen sind insbesondere die Ablagerung und das Ausfällen von organischen Bestandteilen sehr störend. Hierzu sind Asphaltene, Paraffine, Fette u.dgl. zu zählen.

Man hat bereits eine ganze Reihe von Methoden entwickelt, um solche Ablagerungen zu entfernen. So werden mechanische Vorrichtungen zum Abkratzen solcher Ablagerungen verwendet. Daß solche Arbeitsweisen äußerst umständlich und zeit- und arbeitsintensiv sind, braucht nicht näher erläutert zu werden. Auch besteht die Gefahr, daß bei solchen mechanisch arbeitenden Verfahren die Ventile, die Leitungen u.dgl. beschädigt werden.

Bekannt sind ferner Verfahren, bei denen man versucht, die Ablagerungen durch Behandlung mit Flüssigkeiten aufzulösen oder zumindest zu dispergieren, um auf diese Weise die Rohrleitungen, Ventile u.dgl. wieder zu säubern.

So hat man bereits versucht mit heißem Erdöl, Dieselöl, Kerosin und anderen Kohlenwasserstoffen als Lösungsmittel diese Ablagerungen zu entfernen. Diese Arbeitsweisen und Techniken sind jedoch ebenfalls nur mit großen Kosten und technischem Aufwand durchzuführen und bringen darüber hinaus eine Unterbrechung der Produktion mit sich. Auch sind derartige Verfahren sehr langwierig und fordern den Einsatz von größeren Mengen an Lösungs-bzw. Dispersionsmitteln.

In der DE-OS 2 910 837 wird zum Entfernen der erwähnten Ablagerungen vorgeschlagen, eine wäßrige Trägerflüssigkeit einzusetzen, in der ein Kohlenwasserstoff-Lösungsmittel dispergiert ist. Zusätzlich soll dieses Mittel eine Base in Form von Ammoniumhydroxid, organischen Basen oder sauren Salzen enthalten; ferner ist die Mitverwendung eines grenzflächenaktiven Mittels, insbesondere von nicht-ionischen alkylierten Arylpolyätheralkoholen vorgeschrieben.

Ein solches Mittel ist sehr kostspielig und außerdem kompliziert in seiner Zusammensetzung. Es erfordert ferner die Unterbrechung der Produktion.

Weitere Mittel zum Auflösen derartiger Ablagerungen werden z.B. in der US-PS 4 379 490 empfohlen, wo man ein aminaktiviertes Dialkyldisulfidöl einsetzen soll.

Diese in den erwähnten Schriften beschriebenen Verfahren sowie zahlreiche weitere Verfahren weisen den Nachteil auf, daß sie nur die Entfernung von bereits vorhandenen Ablagerungen zum Gegenstand haben, nicht jedoch darauf gerichtet sind, das Entstehen von Ausfällungen bzw. Ablagerungen zu verhindern.

In der kanadischen Patentschrift 1 142 114 wird der Einsatz bestimmter Phosphorsäureester zum Verhindern der Ausfällung von Asphaltenen beschrieben. Dabei sollen die Phosphorsäureester entweder durch das Förderrohr oder ein separates Rohr in die Lagerstätten gepreßt werden; man kann die Phosphorsäureester auch in den Erdölstrom injizieren. Genauere Hinweise, wie dies geschehen soll, sind dieser Schrift nicht zu entnehmen.

Bei dem Verfahren gemäß der erwähnten kanadischen Patentschrift ist es sehr schwierig, genaue Mengen zu dosieren, weil die Handhabung der Phosphorsäureester Schwierigkeiten bereitet.

Ferner bereitet es Schwierigkeiten, während der Förderung oder des Transports des Erdöls des Phosphorsäureester im Erdölstrom gleichmäßig zu verteilen.

Es besteht deshalb ein Bedürfnis nach verbesserten Mitteln und Verfahren zum Verhindern des Ausfällens und Ablagerns von Paraffinen, Erdölharzen, Asphaltenen u.dgl. während der Förderung und des Transports von Erdöl, die gleichzeitig auch noch in der Lage sind, ggf. bereits vorhandene Ablagerungen der genannten Substanzen im Förder-oder Transportsystem zu entfernen.

Aufgabe der Erfindung ist deshalb ein Mittel, das in der Lage ist, die Ausfällung und das Ablagern von Paraffinen, Harzen, Asphaltenen u.dgl. beim Fördern und Transportieren von Erdöl zu verhindern, das direkt an der Quelle eingesetzt werden kann, das ohne Schwierigkeiten optimal und genau dosiert werden kann und gut handhabbar ist, und das darüber hinaus längere Zeit auch unter ungünstigen Bedingungen, z.B. niedrigen Temperaturen gelagert werden kann und das ferner in der Lage ist, bereits im Förder-oder Transportsystem vorhandene Ablagerungen zu entfernen.

Die Aufgabe wird gelöst durch ein Mittel zum Verhindern des Ausfällens und Ablagerns von Paraffinen, Erdölharzen, Asphaltenen u.dgl. beim Fördern oder Transport von Erdöl sowie zum Entfernen von gegebenenfalls bereits vorhandenen Ablagerungen der genannten Substanzen im Förder-oder Transportsytem, enthaltend eine Lösung und/oder Dispersion eines oder mehrerer Phosphorsäureester der allgemeinen Formel

$$(RO)_r [ \leftarrow\!\!( CH_2CH_2O )\!\!\rightarrow_m ]_s PO(OH)_t \quad ....I$$

wobei r = 1 bis 3, s = 0 bis 3 und ≤ r; t = 0-2; r + t = 3;

m = 1-15 und R ein einwertiger Kohlenwasserstoffrest mit 10 bis 22 Kohlenstoffatomen ist, in einem organischen Lösungs-oder Dispersionsmittel.

R ist vorzugsweise ein gradkettiger oder verzweigter gesättiger oder ungesättigter Rest oder ein Alkylaryl-oder Arylalkylrest. Als Lösungs-bzw. Dispersionsmittel ist Erdöl sehr geeignet. Sehr vorteilhaft ist ein Mitteldestillat von Erdöl mit einem Siedebereich von etwa 180 bis 280° als Lösungs-bzw. Dispersionsmittel, wobei Mitteldestillate des zu fördernden oder transportierenden Erdöls bevorzugt werden. Als Lösungs-bzw. Dispersionsmittel ist auch Kreosot sehr geeignet.

Ein weiteres bevorzugtes Lösungs-bzw. Dispersionsmittel ist ein Schmierölfurfurolextrakt. Sehr geeignet ist ferner ein Mineralölaromatenextrakt. Es ist vorteilhaft, Lösungsmittel-bzw. Dispersionsmittelgemische einzusetzen. Als Lösungs-bzw. Dispersionsmittel kann auch Chloroform eingesetzt werden.

Sehr geeignet im Rahmen der Erfindung ist ein Gemisch von Mono-und Diestern der allgemeinen Formel I, wobei R vzw. ein Kohlenwasserstoffrest mit 12 bis 18 Kohlenstoffatomen ist. Geeignete Konzentrationen sind z.B. 1 bis 50 Gew.-% Phosphorsäureester, wobei 20 bis 25 % bevorzugt sind.

Im Rahmen einer besonders vorteilhaften Ausführungsform der Erfindung zeichnen sich die Mittel durch einen pour point von ≤ 0° aus.

Gegenstand der Erfindung ist ferner ein Verfahren zum Verhindern des Ausfällens oder Ablagerns von Paraffinen, Erdölharzen, Asphaltenen u.dgl. beim Fördern oder Transport von Erdöl sowie zum Entfernen von gegebenenfalls bereits vorhandenen Ablagerungen der genannten Substanzen im Förder-oder Transportsystem durch Zusatz von Phosphorsäureestern, das dadurch gekennzeichnet ist, daß man in den Erdölstrom eine Lösung und/oder eine Dispersion eines oder mehrerer Phosphorsäureester der Formel

$$(RO)_r [ \leftarrow\!\!( CH_2CH_2O )\!\!\rightarrow_m ]_s PO(OH)_t$$

wobei r =1 bis 3, s = 0 bis 3 und ≤ r; t = 0,2; r + t = 3;

m = 1-15 und R ein einwertiger Kohlenwasserstoffrest mit 10 bis 22 Kohlenstoffatomen ist, in einem organischen Lösungs-oder Dispersionsmittel injiziert. Vorzugsweise wird die Lösung und/oder Dispersion in Erdöl injiziert, das eine Temperatur von 50 bis 140°C und einen Druck von 50 bis 350 bar aufweist. Es ist vorteilhaft, wenn man die Lösung und/oder die Dispersion in Menge verwendet, die einer Konzentration von 50 bis 2000 ppm Phosphorsäureester der Formel I, bezogen auf die Menge des zu fördernden oder transportierenden Erdöls entspricht.

Phosphorsäureester, wie sie in dem erfindungsgemäßen Mittel gelöst oder dispergiert sind, sind Ester der Orthophosphorsäure und entsprechenden Alkoholen oder Phenolen mit 10 bis 22 Kohlenstoffatomen.

Bei den Alkoholen oder Phenolen kann es sich um synthetisch hergestellte Verbindungen handeln oder um Verbindungen, die aus natürlich vorkommenden Produkten in an sich bekannter Weise gewonnen werden. Sehr geeignet sind Alkoholgemische.

Die Phosphorsäureester können durch die an sich bekannte Umsetzung von entsprechenden Alkoholen bzw. Phenolen mit Phosphorpentoxid erhalten werden. Herstellungsmethoden entsprechender Phosphorsäureester werden z.B. beschrieben in DE-OS 2 727 382, DE-OS 1 950 642, DE-OS 2 350 851 und in der DE-AS 1 226 101.

Als geeignete Alkohole seien erwähnt Laurylalkohol, Stearylalkohol, von den einsetzbaren Phenolen sei als Beispiel Nonylphenol genannt.

Im Rahmen der Erfindung sind sowhol Phosphorsäureester einheitlicher Zusammensetzung geeignet, d.h. Phosphorsäureester, die aus Phosphorsäure und einem einzigen Alkohol hergestellt worden sind, z.B. Phosphorsäure und Stearylalkohol. Dabei sind sowohl die Monoester als auch die Diester geeignet. Es können auch Ester aus Phosphorsäure und Alkoholgemischen hergestellt werden, z.B. der Phosphorsäureester auf Basis von Talgalkohol, wobei es sich bei Talgalkohol im wesentlichen um ein Gemisch von C 16 bis C 18 Alkoholen handelt. Solche Gemische können auch durch Veresterung von Alkoholen hergestellt werden, die sich in der Anzahl der Kohlenstoffe mehr oder weniger stark unterscheiden. So können bei der Veresterung bzw. Umsetzung mit Phosphorpentoxid z.B. C 12 und C 18 Alkohole im Gemisch eingesetzt werden. Sehr geeignet sind auch Phosphorsäureester, die eine mehr oder weniger breite Verteilung bezüglich des Molekulargewichts aufweisen, die z.B. aus Alkoholen unterschiedlicher Kettenlänge hergestellt worden sind. Es sind sowohl Monoester allein als auch Diester allein sowie Gemische derselben verwendbar.

Bei den zu verwendenden Phosphorsäureestern kann es sich auch um technische Produkte handeln, die als Beimengen noch nicht veresterte Alkohole enthalten sowie geringe Mengen an Triester, sowie Phosphorsäure und sonstige technisch bedingte Verunreinigungen.

Als Lösungsmittel bzw. Dispersionsmittel für die Phosphorsäureester sind auch aromatische Kohlenwasserstoffe wie Benzol, Toluol und Xylol geeignet. Insbesondere eignen sich Lösungsmittel, die gleichfalls auch Asphaltene zu lösen vermögen, wie chlorierte Kohlenwasserstoffe, wobei Chloroform besonders hervorzuheben ist. Sehr geeignet sind auch Gemische von organischen Lösungs- bzw. Dispersionsmitteln, wobei sich Chloroform zum Zumischen besonders eignet.

Die Herstellung der Lösungen bzw. Dispersionen kann auf ein fache Weise durch Vermischen des Phosphorsäureesters und des Lösungsmittels geschehen, wobei sich ein Erwärmen und Rühren empfiehlt. Vorzugsweise werden die Mittel als Lösung hergestellt, da diese im allgemeinen stabiler als Dispersionen sind. Es ist auch möglich, daß der Phosphorsäureester nur zum Teil gelöst ist, zum anderen Teil in dispergierter Form vorliegt.

Als Lösungsmittel bzw. Dispersionsmittel kann Erdöl verwendet werden, wobei als Erdöl die Erdölsorte bevorzugt wird, die auch gefördert bzw. transportiert wird. Dies hat den Vorteil, daß im wesentlichen in das zu fördernde oder zu transportierende Erdöl außer dem Phosphorsäureester keine fremden Substanzen eingeführt werden. Vorzugsweise verwendet man als Lösungsmittel ein Mitteldestillat von Erdöl mit einem Siedebereich von etwa 180 bis 280°C, wobei auch hier ein Mitteldestillat des zu fördernden und transportierenden Erdöls bevorzugt wird.

In einer besonders vorteilhaften Ausführungsform der Erfindung wird als Lösungs- bzw. Dispersionsmittel Kreosot eingesetzt. Bei Kreosot handelt es sich um Öle, die z.B. aus einer schweren Holzteerölfraktion erhalten werden können und die dann insbesondere Guajakol, Phenole und Phenoläther enthalten. Geeignet sind auch entsprechende Fraktionen, die aus Braunkohlenteer und Steinkohlenteer gewonnen werden, die ebenfalls als Kreosot bzw. Kreosotöl bezeichnet werden. Nähere Hinweise auf Kreosot bzw. Kreosotöle finden sich in RÖMPPS CHEMIE-LEXIKON 8. Auflage, Franckh'sche Verlagsbuchhandlung Stuttgart (1983). Kreosot bzw. Kreosotöle sind im Handel erhältlich. So z.B. Creosote 321 Oil der Firma Coalite Oils Chemical Ltd., P.O. Box 21, Chesterfield, Derbyshire.

Sehr geeignet als Lösungsmittel sind auch bestimmte Extrakte von Ölen, so insbesondere der Furfurolextrakt von Schmieröl und andere Aromatenextrakte von Erdölfraktionen. Hinweise auf diese Extrakte finden sich z.B. im HANDBUCH DER MINERALÖLE UND VERWANDTER PRODUKTE von Carl Zerber, Springer Verlag (1969).

Die verwendeten Phosphorsäureester können auch in äthoxylierter Form verwendet werden. Diese werden in an sich bekannter Weise aus äthoxylierten Alkoholen oder Phenolen hergestellt. Der Äthoxylierungsgrad kann dabei in weiten Grenzen variieren. Werden Diester in Form äthoxylierter Produkte verwendet, so ist es nicht erforderlich, daß beide Esterfunktionen den gleichen Äthoxylierungsgrad aufweisen, es ist ohne weiteres möglich, auch äthoxylierte Produkte zu verwenden, die in Bezug auf die beiden Estergruppen unterschiedliche Äthoxylierungsgrade besitzen.

Es können auch nicht-äthoxylierte und äthoxylierte Phosphorsäureester im Gemisch eingesetzt werden.

Das erfindungsgemäße Mittel soll in der Hauptsache Phosphorsäureester der Formel I enthalten; es schadet jedoch nichts, wenn auch eine kleinere Menge an Phosphorsäureestern zugegen sind, die nicht vollständig der Formel I entsprechen, z.B. Phosphorsäureester von Alkoholen mit weniger als 10 Kohlenstoffatomen. So stören z.B. 10 bis 20 Gew.-% entsprechender Verbindungen nicht, sofern doch mindestens 80 % des vorhandenen Phosphorsäureester der Formel I entspricht.

Die Konzentration der Phosphorsäureester in dem Lösungs-bzw. Dispersionsmittel kann in weiten Bereichen schwanken und wird insbesondere im Hinblick auf das entsprechende Einsatzgebiet eingestellt.

Das Mittel kann in sehr konzentrierter Form verwendet werden, so sind Konzentrationen an Phosphorsäureester bis gu 50 % möglich. In manchen Fällen kann es sich empfehlen, das Mittel mit den oben erwähnten Lösungs-bzw. Dispersionsmittel vorzuverdünnen, bevor man es bei der Förderung bzw. beim Transport des Erdöls entsprechend der Erfindung einsetzt.

Zur Verdünnung eignen sich selbstverständlich das Lösungs-bzw. Dispersionsmitel, das bereits in der Lösung bzw. Dispersion vorhanden ist. Man kann auch andere Lösungs-oder Dispersionsmittel oder auch Gemische zum Verdünnen einsetzen.

Das Mittel wird in solchen Mengen eingesetzt, daß das Ausfällen und Ablagern von Paraffinen, Harzen, Asphaltenen u.dgl. beim Fördern oder Transport von Erdöl verhindert wird, bzw. daß gegebenenfalls vorhandene Ablagerungen wieder entfernt werden.

Im allgemeinen reichen Mengen aus, die zu einer Konzentration von etwa 50 bis 2000 ppm Phosphorsäureester im Erdölstrom beim Fördern oder Transportieren führen. Die erforderliche Menge des Mittels und insbesondere die entsprechende Konzentration läßt sich leicht aus der Fördergeschwindigkeit des zu fördernden oder transportierenden Erdöls bestimmen.

Das erfindungsgemäße Mittel wird vorzugsweise in eine Fördersonde injiziert, in der das Erdöl eine Temperatur von 50 bis 140°C und einen Druck von 50 bis 350 bar aufweist. Die Art und Weise der Injektion hängt natürlich von dem vorhandenen Förder-oder Hauptrohr bestehen und ein Rohr zur seitlichen Injektion besitzen. Bei solchen Rohrsystemen kann man z.B. seitlich ober halb der Förderpumpe injizieren. Bei Fördersystemen, die mit Ringraum arbeiten, empfiehlt sich das Injizieren des Mittels durch den Ringraum

Die erfindungsgemäßen Mittel liegen vorzugsweise als Lösung vor.

Besonders geeignet sind Mittel, die lagerstabil sind und insbesondere bei Temperaturen bis 0° und darunter bleiben. Dazu eignen sich insbesondere aromatenreiche Lösungsmittel, wie die Mitteldestillate der Erdöle mit einem Siedepunkt von 180 bis 280°C oder die aromatenreiche Extrakte, wie sie z.B. mit Furfurolextraktion erhalten werden. Solche aromatenreiche Lösungsmittel können aus Teer, z.B. Holzkohlenteer u.dgl. gewonnen werden.

Viele der erwähnten Lösungsmittel sind im Handel erhältlich, so z.B. Shellsol der Firma Shell oder Solvesso 220 der Firma Esso Chemie GmbH, Köln.

Fördern des Erdöls im Sinne der Erfindung bedeutet Gewinnung von Erdöl aus den Lagerstätten durch einen Förderstrang. Transport des Erdöls im Sinne der Erfindung bedeutet das Weiterleiten des Erdöls durch Rohrleitungen, auch durch Behälter, z.B. Separatoren, Pipelines u.dgl.

Im Rahmen der Erfindung werden Lösungsmittel bzw. Dispergiermittel bevorzugt, die zusammen mit dem Rohöl weiterverarbeitet werden können. Dazu eignen sich insbesondere Lösungsmittel, die einen höheren Flammpunkt aufweisen, vorzugsweise höher als 70°C.

Im Rahmen der Erfindung bedeutet organisches Lösungsmittel eine organische Flüssigkeit, die in der Lage ist, die erfindungsgemäß verwendeten Phosphorsäureester zu lösen. Dabei sollte die Löslichkeit der Phosphorsäureester in dem Lösungsmittel mindestens 1 %, vorzugsweise mindestens 10 % betragen. Lösungsmittel, die Löslichkeiten von mindestens 20, 30 oder 50 % besitzen, sind besonders geeignet. Bevorzugt sind die organischen Lösungsmittel, die bei Zimmertemperatur, insbesondere bei Temperaturen um 0°C und darunter noch flüssig sind und flüssige Lösungen bei diesen Temperaturen zu bilden imstande sind.

Als organisches Dispersionsmittel werden organische Flüssigkeiten bezeichnet, in denen die Phosphorsäureester dispergiert werden können, d.h. in feiner Verteilung vorliegen. Dabei werden Dispergiermittel bevorzugt, in denen der Phosphorsäureester zumindest in 1%iger Konzentration dispergiert werden kann, ohne daß es dabei zu Agglomerationen kommt, die sich absetzen.

Es ist durchaus möglich, daß ein Teil der im Mittel vorhandenen Phosphorsäureester in gelöster Form, der andere in dispergierter Form vorliegt.

Der pour point gibt einen Anhalt für das Erreichen der Fließgrenze der verwendeten Lösungen bzw. Dispersionen. Er ist in der DIN 51 597 näher definiert.

Mitteldestillat des zu fördernden oderzu transportierenden Erdöls bedeutet, daß man ein Mitteldestillat des an Ort und Stelle zu fördernden bzw. zu transportierenden Erdöls verwendet. Dazu ist es notwendig, daß man von dem Erdöl, das gefördert oder transportiert wird, zunächst ein entsprechendes Mitteldestillat herstellt und dieses zur Bereitung des Mittels verwendet. Auf diese Weise erreicht man, daß durch das Mittel keine Bestandteile aus fremden Erdölen eingeführt werden, was sich bei der Aufarbeitung des Erdöls sehr positiv bemerkbar macht.

Es war besonders überraschend, daß das erfindungsgemäße Mittel in so hervorragender Weise geeignet ist, beim Fördern und Trans portieren von Erdöl das Ausfällen und Ablagern von Paraffinen, Erdölharzen, Asphaltenen u.dgl. zu verhindern. Das Mittel ist besonders zum Verhindern der Ausfällung bzw. Ablagerung von Asphaltenen geeignet. Überraschend war ferner, daß das erfindungsgemäße Mittel auch in der Lage ist, bereits vorhandene Ablagerungen zu entfernen.

Besonders Asphaltene bereiten bekanntlich beim Fördern und Transportieren von Erdöl schon seit Jahrzehnten große Probleme. Die Zusammensetzung der Asphaltene und ihr Anteil im Erdöl kann von Förderstätte zu Förderstätte in weiten Bereichen schwanken. Über die chemische Natur von Asphaltenen ist bereits eine umfangreiche Literatur erschienen. Auch wird laufend auf Fachtagungen und Symposien berichtet. So hat J.G. Speight auf dem Symposium International in Lyon am 25. bis 27. Juni 1984 über die Natur von Asphaltenen berichtet. (Edition technip 27 rue Gino et, 75 737 Paris, Cedex15 Best. Nr. ISBN 2/7108/04751.)

Das erfindungsgemäße Mittel verhindert nicht nur das Ausfällen und Ablagern von Asphaltenen sondern auch von weiteren Produkten wie Paraffinen, insbesondere solchen mit höherem Molekulargewicht, die ebenfalls zum Ausfällen und Ablagern neigen. Auch wird das Ausfällen und Ablagern von Erdölharzen verhindert, die im Erdöl z.T. allein vorkommen, z.T. auch in Begleitung von Asphaltenen.

Es war besonders überraschend, daß durch die Verwendung des erfindungsgemäßen Mittels auch das Ausfällen und Ablagern von anorganischen Bestandteilen sowie von Verbindungen, die neben dem organischen Teil noch Metalle enthalten, insbesondere von Derivaten, die Metalle wie Nickel und Vanadium enthalten und als Porphyrine vorkommen, reduziert wird.

Die Viskosität der Mittel ist günstig; auch zeigen die Mittel ein vorteilhaftes Viskositätsverhalten bie verschiedenen Temperaturen, so daß sie gut gelagert und in problemloser Weise dosiert werden können.

Die Mittel sind vielseitig anwendbar und können durch Auswahl der Lösungsmittel, durch Verwendung spezieller Lösungsmittelgemische auf spezielle Problemfälle eingestellt werden, d.h. insbesondere den Erdölen angepaßt werden. Durch Variieren der Phosphorsäureester sowie ihrer Konzentration können die Mittel ebenfalls zusätzlich den bestehenden Problemen angepaßt werden.

Das erfindungsgemäße Mittel verteilt sich nach der Injektion sehr schnell vollständig und gleichmäßig in dem Erdölstrom und sorgt somit für ein umfassendes Verhindern des Ausfällens der Paraffine, Asphaltene, Harze usw. Da das Mittel nur in sehr geringen Konzentrationen eingesetzt zu werden braucht, wird dadurch der Charakter des zu fördernden bzw. transportierenden Erdöls praktisch nicht verändert. Die winzigen Mengen an Phosphorsäureester stören bei der Weiterverarbeitung, insbesondere bei der Fraktionierung des Erdöls nicht; auch stören die mitverwendeten Lösungsmittel im allgemeinen nicht, da sie hauptsächlich aus Verbindungen bestehen, welche der Natur des Erdöls entsprechen und somit im allgemeinen in den einzelnen Fraktionen des Erdöls verbleiben können. Es ist somit meistens nicht erforderlich, das Lösungsmittel zurückzugewinnen oder abzutrennen.

Das erfindungsgemäße Mittel kann sofort an Ort und Stelle eingesetzt werden und braucht im allgemeinen nicht nocht entsprechend für den Einsatz vorbereitet werden. Dies ist insbesondere von großem Vorteil bei Förderstellen, die sich an ungünstigen Stellen befinden, z.B. im Meer oder in weit abgelegenen Gegenden, wo Möglichkeiten ein geeignetes Mittel selbst herzustellen, praktisch nicht vorhanden sind.

Es war besonders überraschend, daß bei Verwendung des erfindungsgemäßen Mittels sich die Förderung und der Transport von Erdöl, welches Asphaltene, Paraffine u.dgl., die zum Ausfällen und Bilden von Ablagerungen neigen, sehr lange durchgeführt werden kann, ohne daß es zu den bekannten Betriebsstörungen und Schwierigkeiten kommt, welche durch die Bildung von Ablagerungen verursacht werden. Besonders überraschend war es ferner, daß das Mittel auch das Ausfällen und das Bilden von Ablagerungen verhindert, wenn während der Förderung bzw. während des Transport es zu Druckabnahme und Temperatursenkung kommt. Bekanntlich herrschen beim Fördern von vielen Erdölsorten an der Langerstätte hoher Druck

und hohe Temperaturen. Durch Entspannen nimmt der Druck im Förderstrang mit steigender Höhe ab, gleichzeitig ist auch ein Temperaturabfall festzustellen, wodurch das Ausfällen von Asphaltenen u.dgl. begünstigt wird.

Das Mittel kann kontinuierlich zudosiert werden; in vielen Fällen ist es aber auch ausreichend, wenn intermittierend injiziert wird.

Es war ferner überraschend, daß das erfindungsgemäße Mittel in der Lage ist, das Ausfällen von Substanzen, wie Asphaltene u.dgl. zu verhindern, und gleichzeitig auch dazu beiträgt, evtl. bereits vorhandene Ablagerungen zu entfernen, Effekte, die in diesem Maße weder mit Phosphorsäureestern allein noch mit entsprechenden Lösungsmitteln erreicht werden.

Besonders vorteilhaft ist, daß die eingesetzten Phosphorsäureester nicht unbedingt in besonders hoher Reinheit eingesetzt werden müssen, sondern daß es auch möglich ist, ohne weiteres technische Gemische derselben zu verwenden.

Wenn es auch nicht notwendig ist, dem Mittel weitere Zusätze beizugeben und es völlig ausreicht, wenn das Mittel ohne Zusätze eingesetzt wird, d.h. wenn es lediglich aus den Phosphorsäureestern und den Lösungs-bzw. Dispersionsmitteln besteht, so kann man dem Mittel jedoch auch andere Substanzen, wie Detergentien usw. beimengen.

Besonders vorteilhaft bei den erfindungsgemäßen Mitteln ist ferner, daß ihr Viskositätsverhalten sehr günstig ist, d.h., daß die Viskosität einer Lösung mit einer bestimmten Konzentration in Abhängigkeit von der Temperatur nur in verhältnismäßig engen Grenzen variiert. Auch sind noch Lösungen mit hohen Konzentrationen herstellbar, deren Viskosität ein problemloses Verarbeiten der Mittel beim Fördern bzw. Transportieren von Erdöl gewährleistet.

Das Mittel wirkt einmal dem Ausfällen von in Erdöl gelösten Asphaltenen u.dgl. entgegen, was ohne Zusatz dieser Mittel vor allem bei Erniedrigung der Temperatur und Abnahme des Drucks geschehen kann, d.h. ein beachtlicher Teil dieser Substanzen bleibt in Lösung. Das Mittel verhindert weiter das Agglomerieren von in dispergierter Form vorhandener Asphaltenen u.dgl., so daß es nicht zu den gefürchteten Ablagerungen kommt, die zum Verstopfen der Leitungen, Ventile usw. führen können.

Die Erfindung wird durch folgendes Beispiel näher erläutert:

## Beispiel

Aus einem käuflich erhältlichen technischen Alkoholgemisch wurde in einem Molverhältnis 3 Mol Alkohol und 1 Mol Phosphorpentoxid in an sich bekannter Weise ein Phosphorsäureestergemisch hergestellt. Das Ausgangsalkoholgemisch hatte eine Zusammensetzung wie im folgenden angegeben:

Ca. 1,5 % Alkohol mit der Kettenlänge 10 C-Atome, 53 % C 12, 21,5 % C 14, 10,5 % C 16 und 11,5 % C 18. Der Rest bestand aus Kohlenstoffen, Wasser und $C_{20}$-Alkoholen.

Das erhaltene Produkt lag zu 41 % als Monoester und zu 51 % als Diester vor. Der Rest der Alkohole blieb unverestert. Das Gemisch enthielt darüber hinaus Spuren von Phosphorsäure.

20 Teile dieses Phosphorsäureestergemisches und 80 Teile eines Erdölmitteldestillat, das im folgenden noch näher beschrieben wird, wurden unter Rühren und leichtem Erwärmen miteinander gemischt. Es wurde eine homogene niedrigviskose Flüssigkeit erhalten, die lange Zeit lagerstabil ist und selbst bei Temperaturen um 0°C nicht zum Entmischen bzw. zum Erstarren neigt.

Als Erdölmitteldestillat wurde ein Mitteldestillat aus einem griechischen Erdöl mit folgenden Eigenschaften verwendet:

| | |
|---|---|
| Dichte (bei 15°C) | 0,821 g/cm³ |
| Zähigkeit (bei 20°C) | 1,477 mPa·s |
| Aromatengehalt | 27 Vol.-% |
| Siedebeginn | 160°C |
| überdestilliert bei 250°C | 95 Vol.-% |
| Siedeende | 280°C |
| Flammpunkt | > 55°C |

Mit diesem Mittel ließ sich die Ausfällung von Asphaltenen bei einer Phosphorsäureesterkonzentration von 500 ppm, bezogen auf Erdöl, weitgehend verhindern. Das behandelte Erdöl wies eine Temperatur von 127°C und einen Druck von 250 bar auf.

Aus dem wie vorstehend beschrieben hergestellten Phosphorsäureestergemisch und Creosote 312 Oil der Fa. Coalite Oils und Chemicals Ltd. wurden Lösungen verschiedener Konzentrationen hergestellt. Von den Lösungen wurde bei verschiedenen Temperaturen die Viskosität gemessen. Die Ergebnisse sind in den folgenden Aufstellungen zusammengestellt:

Tabelle 1

Meßtemperatur 0°C

| Konzentration Phosphorsäureester: | Viskosität: |
|---|---|
| 1 % | 54 mpas |
| 10 % | 73 " |
| 25 % | 130 " |

## Tabelle 2

Meßtemperatur 40°C

| Konzentration Phosphorsäureester: | Viskosität: |
|---|---|
| 1 % | 24 mpas |
| 10 % | 31 " |
| 25 % | 45 " |
| 40 % | 53 " |

## Tabelle 3

Konzentration 25 %

| Meßtemperatur in °C | Viskosität: |
|---|---|
| 0 | 130 mpas |
| 20 | 68 " |
| 40 | 45 " |
| 75 | 28 " |
| 100 | 23 " |

### Ansprüche

1. Mittel zum Verhindern des Ausfällens und Ablagerns von Paraffinen, Erdölharzen, Asphaltenen u.dgl. beim Fördern oder Transport von Erdöl sowie zum Entfernen von ggf. bereits vorhandenen Ablagerungen der genannten Substanzen im Förder-oder Transportsystem enthaltend eine Lösung und/oder Dispersion eines oder mehrerer Phoshorsäureester der allgemeinen Formel

$(RO)_r [ -(CH_2CH_2)-_m ]_s PO(OH)_t$ ....I,

wobei r = 1 bis 3, s = 0 bis 3 und $\leqq$ r; t -0-2;

r + t -3; m = 1-15 und R ein einwertiger Kohlenwasserstoffrest mit 10 bis 22 Kohlenstoffatomen ist, in einem organischen Lösungs-oder Dispersionsmittel.

2. Mittel nach Anspruch1, dadurch gekennzeichnet, daß R ein gradkettiger oder verzweigter gesättigter oder ungesättiger oder ein Alkylaryl-oder Arylalkylrest ist.

3. Mittel nach Anspruch 1 oder 2, gekennzeichnet durch Erdöl als Lösungs-bzw. Dispersionsmittel.

4. Mittel nach einem der Ansprüche 1 bis 3, dadurch gekennzeichnet, daß das Lösungs-bzw. Dispersionsmittel ein Mitteldestillat von Erdöl mit einem Siedebereich von etwa 180 bis 280°C ist.

5. Mittel nach Anspruch 4, dadurch gekennzeichnet, daß das Mitteldestillat ein Mitteldestillat des zu fördernden oder zu transportierenden Erdöls ist.

6. Mittel nach Anspruch 1 oder 2, dadurch gekennzeichnet, daß das Lösungsmittel bzw. Dispersionsmittel Kreosot ist.

7. Mittel nach Anspruch 1 oder 2, dadurch gekennzeichnet, daß das Lösungs-bzw. Dispersionsmittel ein Schmierölfurfurolextrakt ist.

8. Mittel nach Anspruch 1 oder 2, dadurch gekennzeichnet, daß das Dispersions-bzw. Lösungsmittel ein Mineralölaromatenextrakt ist.

9. Mittel nach Ansprüche 1 bis 8, dadurch gekennzeichnet, daß das Mittel Lösungsmittel bzw. Dispersionsmittelgemische enthält.

10. Mittel nach einem der Ansprüche 1 bis 9, dadurch gekennzeichnet, daß das Mittels als Lösungs-bzw. Dispersionsmittel Chloroform enthält.

11. Mittel nach einem der Ansprüche 1 bis 10, gekennzeichnet durch ein Gemisch von Mono-und Diestern der allgemeinen Formel I, wobei R ein Kohlenwasserstoffrest mit 12 bis 18 Kohlenstoffatomen ist.

12. Mittel nach einem der Ansprüche 1 bis 11, gekennzeichnet durch eine Konzentration an Phosphorsäureestern von 1 bis 50 Gew.-%.

13. Mittel nach Anspruch 12, gekennzeichnet durch eine Phosphorsäureesterkonzentration von 20 bis 25 %.

14. Mittel nach einem der Ansprüche 1 bis 13, gekennzeichnet durch einen pour point von ≤ 0°C.

15. Verfahren zum Verhindern des Ausfällens oder Ablagerns von Paraffinen, Erdölharzen, Asphaltenen u.dgl. beim Fördern oder Transport von Erdöl sowie zum Entfernen von gegebenenfalls bereits vorhandenen Ablagerungen der genannten Substanzen im Förder-oder Transportsystem durch Zusatz von Phosphorsäureestern, dadurch gekennzeichnet, daß man in den Erdölstrom eine Lösung und/oder eine Dispersion eines oder mehrerer Phosphorsäureester der Formel

$$(RO)_r [ \left( CH_2CH_2O \right)_m ]_s PO(OH)_t$$

wobei r = 1 bis 3, s = 0 bis 3 und ≤ r; t = 0-2;

r + t = 3; m = 1-15 und R ein einwertiger Kohlenwasserstoffrest mit 10 bis 22 Kohlenstoffatomen ist, in einem organischen Lösungs-oder Dispersionsmittel injiziert.

16. Verfahren nach Anspruch 15, dadurch gekennzeichnet, daß man die Lösung und/oder Dispersion in Erdöl injiziert, das eine Temperatur von 50 bis 140°C und einen Druck von 50 bis 350 bar aufweist.

17. Verfahren nach einem der Ansprüche 15 bis 16, dadurch gekennzeichnet, daß man die Lösung und/oder die Dispersion in Mengen verwendet, die einer Konzentration von 50 bis 2000 ppm Phosphorsäureester der Formel I, bezogen auf die Menge des zu fördernden oder transportierenden Erdöls, entspricht.

18. Verfahren nach einem der Ansprüche 15 bis 17, dadurch gekennzeichnet, daß man Phosphorsäureester der allgemeinen Formel I verwendet, bei der R ein gradkettiger oder verzweigter gesättigter oder ungesättigter oder ein Alkylaryl-oder Arylalkylrest ist.

19. Verfahren nach einem der Ansprüche 15 biz 18, dadurch gekennzeichnet, daß man als Lösungs-bzw. Dispersionsmittel Erdöl verwendet.

20. Verfahren nach einem der Ansprüche 15 bis 19, dadurch gekennzeichnet, daß man als Lösungs-bzw. Dispersionsmittel ein Mitteldestillat von Erdöl mit einem Siedebereich von etwa 180 bis 280° verwendet.

21. Verfahren nach Anspruch 20, dadurch gekennzeichnet, daß man ein Mitteldestillat des zu fördernden oder zu transportierenden Erdöls verwendet.

22. Verfahren nach einem der Ansprüche 15 bis 18, dadurch gekennzeichnet, daß man als Lösungs-bzw. Dispersionsmittel Kreosot verwendet.

23. Verfahren nach einem der Ansprüche 15 bis 18, dadurch gekennzeichnet, daß man als Lösungs-bzw. Dispersionsmittel ein Schmierölfurfurolextrakt verwendet.

24. Verfahren nach einem der Ansprüche 15 bis 18, dadurch gekennzeichnet, daß man als Lösungs-bzw. Dispersionsmittel ein Mineralölaromatenextrakt verwendet.

25. Verfahren nach einem der Ansprüche 15 bis 24, dadurch gekennzeichnet, daß man Lösungsmittel-bzw. Dispersionsmittelgemische verwendet.

26. Verfahren nach einem der Ansprüche 15 bis 25, dadurch gekennzeichnet, daß man als Lösungs-bzw. Dispersionsmittel Chloroform verwendet.

27. Verfahren nach einem der Ansprüche 15 bis 26, dadurch gekennzeichnet, daß man ein Gemisch von Mono-und Diestern der allgemeinen Formel I verwendet.

28. Verfahren nach einem der Ansprüche 15 bis 27, dadurch gekennzeichnet, daß man Lösungen und/oder Dispersionen mit einer Konzentration an Phosphorsäureestern von 1 bis 50 % verwendet.

29. Verfahren nach Anspruch 28, dadurch gekennzeichnet, daß man Konzentrationen von 20 bis 25 Gew.-% verwendet.

30. Verfahren nach einem der Ansprüche 15 bis 29, dadurch gekennzeichnet, daß man Lösungen bzw. Dispersionen mit einem pour point von ≤ 0°C verwendet.